# DEMANDE DE BREVET EUROPEEN

(11) **EP 1 990 224 A1**
(43) Date de publication de la demande: **12.11.2008**
(21) Numéro de dépôt: 08300196.6
(22) Date de dépôt: 29.04.2008
(51) Int. Cl.: B60J 1/20

(54) **Agencement d'un rideau pare-soleil comportant des moyens anti-bruit**

(30) Priorité: 10.05.2007 FR 0754973
(71) Demandeur: Renault S.A.S., 92100 Boulogne-Billancourt (FR)
(72) Inventeur: Bouillon, Jean-Charles, 78940, La Queue Lez Yvelines (FR)

(57) **Abrégé**

Agencement d'un rideau pare-soleil (18) sur une pore (10) de véhicule automobile, comportant un panneau (12) et un cadre (16) de vitre (14), ledit rideau pare-soleil (18) pouvant occuper une position rangée dans laquelle il est enroulé dans un logement ménagé dans le panneau (12) et une position déployée dans laquelle un bord supérieur (24) du rideau (18) est relié à une partie supérieure (26) du cadre (16) par l'intermédîaire d'une barre de tirage (28) coopérant au moins un crochet (30) par ladite partie supérieure (26) du cadre (16), de que le rideau (18) s'étende le long de la vitre, en ce que le crochet (30) comporte des moyens de limitation des vibrations de la barre de tirage (28) à l'intérieur dudit crochet (30).

## Description

L'invention concerne un agencement d'un rideau pare-soleil sur une porte de véhicule automobile, comportant un panneau et un cadre de vitre, ledit rideau pare-soleil pouvant une position rangée dans laquelle il est enroulé un logement ménagé dans le panneau et une position déployée dans laquelle un bord supérieur du rideau est relié à une partie supérieure du cadre par l'intermédiaire d'une barre de tirage coopérant avec au moins un crochet porté par ladite partie supérieure de cadre, de manière que le rideau s'étende le long de la vitre.

Très souvent, dans un tel agencement de pare-soleil, des bruits sont générés par des vibrations de la barre de tirage à l'intérieur du crochet. A la longue, ces bruits peuvent se révéler être très gênants pour les du véhicule.

Le document FR-A-2873956 décrit un dispositif de rideau pare-soleil dans lequel la de tirage est en appui sur une lame élastique d'orientation c'est-à-dire sensiblement à la vitre, portée par un logement de support d'une de la barre de tirage. Ladite lame élastique sur la barre de tirage, une contrainte tendant à faire monter ladite barre vers le haut. Ainsi, la lame élastique un moyen de rattrapage de jeu permettant de tendre la toile du rideau pare-soleil pour éviter qu'elle ne plisse ou qu'elle ne claque.

Cependant, un jeu subsiste entre la barre de tirage et la partie supérieure du logement, ce qui rend possible le déplacement de la barre de tirage dans le logement et ainsi l'apparition de vibrations et de bruits intempestifs. De plus, la contrainte exercée par la lame élastique sur la barre de tirage en tendant à la ramener vers le haut risque d'amplifier ce phénomène. En outre les supports, de grande taille, sont très visible depuis l'extérieur du véhicule.

Dans ce type de dispositif, le problème de bruit peut alors être limité par la présence de nervures ajustées serrées, ce qui nécessite cependant l'utilisation d'une de tirage cylindrique. Une autre solution consiste à utiliser de la feutrine, ce qui présente un coût élevé et des risques d'usure rapide.

Afin de pallier ces inconvénients, l'invention a pour objet un agencement de rideau pare-soleil comportant des moyens anti-bruit qui soit simple et peu onéreux.

A cet effet, l'invention propose un de rideau pare-soleil du type cité ci-dessus, caractérisé en ce que le crochet comporte des moyens de limitation des vibrations de la de tirage à l'intérieur dudit crochet.

Selon d'autres caractéristiques de l'invention:
- Le crochet 30 présente une portion d'accrochage comportant une branche et une branche inférieure délimitant une ouverture, une lame élastique s'étendant à l'intérieur de l'ouverture depuis un bord d'extrémité de la branche supérieure, et venant en appui sous contrainte contre la de tirage, de manière à plaquer ladite barre contre une extrémité recourbée vers le haut de la branche et à limiter le déplacement de ladite barre au une direction transversale.
- La barre de est sensiblement parallélépipédique, de manière qu'elle au moins trois points d'appui, deux avec la branche de la portion et un avec la lame.
- Une de la de tirage coopère avec la portion recourbée vers le du bord de la branche inférieure du et une de la barre, à la face, coopère avec la lame.
- La lame élastique est de moulage avec le crochet.

D'autres caractéristiques et avantages de l'invention apparaîtront à la lecture de la description d'exemples de réalisation d'un agencement d'un rideau pare-soleil en référence aux dessins annexés dans lesquels :
- La figure 1 est une vue d'une porte comportant de rideau pare-soleil selon l'invention.
- La figure 2 est une vue latérale en coupe d'un crochet de retenue de rideau pare-soleil.

Dans la qui suit, nous prendrons à titre non limitatif une orientation longitudinale, et transversale indiquée par le trièdre L,V,T des figures et 2.

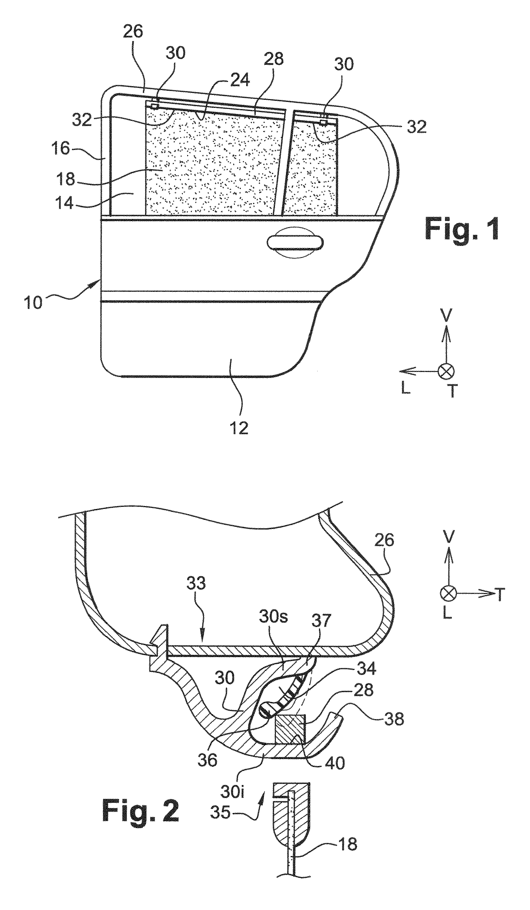

Tel que représenté à la figure 1, une porte 10 de véhicule automobile (non représenté) comporte un panneau inférieur 12 et une vitre 14 délimitée par un 16.

La vitre 14 peut être occultée par un dispositif de rideau pare-soleil 18.

Le dispositif de rideau pare-soleil 18 est ainsi apte à occuper une configuration rangée (non représentée) dans laquelle est enroulé dans un logement ménagé dans le panneau de porte inférieur 12 et une configuration d'utilisation dans laquelle il s'étend le de la vitre 14, son bord supérieur 24 étant relié à une partie supérieure 26 du cadre de vitre 16 par l'intermédiaire d'une barre de tirage 28, apte à coopérer avec au moins un crochet de retenue 30 porté par la partie supérieure du cadre de 16.

Dans le mode de réalisation décrit ici, l'agencement comporte deux crochets 30, coopérant avec les extrémités 32 de la barre de tirage 28.

Tel que représenté à la figure 2, le crochet 30 une portion de fixation 33 reliée à la partie supérieure 26 du de vitre 16 et une portion 35. La portion d'accrochage 35 présente sensiblement la d'un C, comportant une branche supérieure 35s (qui peut être reliée comme dans le cas décrit ici, au cadre 16) et une branche inférieure 35i.

L'ouverture 34 par les branches 35s et 35i de la portion d'accrochage 35, tournée vers l'intérieur de l'habitacle, est destinée à recevoir la barre de tirage 28.

La portion d'accrochage 35 comporte une lame élastique 36, s'étendant en de la vitre 14, à de l'ouverture 34, un bord d'extrémité 37 de la branche supérieure 35s.

La lame élastique 36 s'étend donc un plan transversal, c'est-à-dire un plan perpendiculaire au plan du rideau 18.

Ainsi lorsque la de tirage 28 est insérée dans l'ouverture 34 de la portion d'accrochage 35, la lame élastique 36 se déforme pour de sa de repos en à sa position de travail dans laquelle elle est en appui sous contrainte contre ladite de tirage 28. D'autre part, un bord d'extrémité 38 de la branche inférieure 35i de la portion d'accrochage 35 est recourbé vers le haut. De cette façon, la lame élastique 36 exerce un effort sur la barre de tirage 28 (indiqué par la flèche F) et tend ainsi à plaquer la de tirage 28 contre la partie de la branche inférieure 35i, ce qui son déplacement selon au moins une direction transversale et limite ainsi la formation de vibrations et de bruit.

La barre de tirage 28 peut présenter une section sensiblement carrée ou rectangulaire. Ainsi, la barre de tirage 28 présente au moins trois points d'appui : deux avec la portion d'accrochage et un avec la lame 36. Selon un mode de réalisation représenté à la figure 2, une face 40 de la de tirage 28 coopère avec la partie recourbée de la branche inférieure 35i. Une autre face 42, opposée à la face 40, coopère avec la lame 28. Ce mode de réalisation particulier présente l'avantage d'être très stable.

La lame élastique 36 peut être issue de moulage avec le crochet 30 ce qui permet de cette manière de réduire les coûts de fabrication.

L'agencement de rideau pare-soleil selon l'invention permet donc de manière simple et peu onéreuse de réduire les problèmes de bruyance créés par la barre de tirage dans les crochets de retenue.

## Revendications

1. Agencement d'un rideau (18) sur une (10) de véhicule automobile, un panneau (12) et un cadre (16) de (14), ledit rideau pare-soleil (18) pouvant occuper une position rangée dans laquelle est enroulé un logement ménagé dans le panneau (12) et une position déployée dans laquelle un bord supérieur (24) du rideau (18) est relié à une partie supérieure (26) du cadre (16) par l'intermédiaire d'une de tirage (28) coopérant avec au un crochet (30) porté par ladite partie supérieure (26) du cadre (16), de que le rideau (18) s'étende le long de la vitre, **caractérisé en ce que** le crochet (30) comporte des moyens de limitation des vibrations de la barre de tirage (28) à l'intérieur dudit crochet (30).

2. Agencement d'un rideau de pare-soleil (18) selon la revendication 1, **caractérisé en ce que** le crochet (30) présente une portion d'accrochage (35) comportant une branche supérieure (35s) et une branche inférieure (35î) délimitant une ouverture (34), une lame élastique (36) s'étendant à l'intérieur de l'ouverture (34) depuis un bord d'extrémité (37) de la branche supérieure (35s), et venant en appui sous contrainte contre la barre de tirage (28), de manière à plaquer ladite barre (28) contre une extrémité recourbée vers le haut (38) de la branche inférieure (35i) et à limiter le déplacement de ladite barre (28) selon au moins une direction transversale.

3. Agencement d'un rideau pare-soleil (18) selon la revendication précédente, **caractérisé en ce que** la barre de tirage (28) est sensiblement parallélépipédique, de manière qu'elle comporte au moins trois points d'appui, deux avec la branche inférieure (35i) de la portion d'accrochage (35) et un avec la lame (36).

4. Agencement d'un rideau pare-soleil (18) selon la revendication précédente, **caractérisé en ce qu'**une face (40) de la barre (28) coopère avec le bord d'extrémité recourbé (38) de la branche inférieure (35i) du crochet (30) et une face (42) de la barre (28), opposée à la face (46), coopère avec la lame (36).

5. Agencement d'un rideau de pare-soleil (18) selon la revendication précédente, **caractérisé en ce que** la lame élastique (36) est issue de moulage avec le crochet (30).
